# EUROPÄISCHE PATENTSCHRIFT

(11) **EP 3 616 490 B1**
(45) Veröffentlichungstag und Bekanntmachung des Hinweises auf die Patenterteilung: **09.03.2022**
(21) Anmeldenummer: 19401031.0
(22) Anmeldetag: 22.08.2019
(51) Int. Cl.: A01C 17/00

(54) **VERFAHREN ZUM ERFASSEN DES EINFLUSSES DER NEIGUNG EINES LANDWIRTSCHAFTLICHEN STREUGERÄTS AUF DIE STREUGUTVERTEILUNG**
METHOD FOR DETERMINING THE INFLUENCE OF THE INCLINATION OF AN AGRICULTURAL SPREADER ON THE DISTRIBUTION PATTERN
PROCÉDÉ DE DÉTERMINATION DE L'INFLUENCE D'INCLINAISON D'UN ÉPANDEUR AGRICOLE SUR LA DISTRIBUTION DES MATÉRIAUX À ÉPANDRE

(30) Priorität: 28.08.2018 DE 102018120948
(43) Veröffentlichungstag der Anmeldung: 04.03.2020
(73) Patentinhaber: Amazonen-Werke H. Dreyer SE & Co. KG, 49205 Hasbergen (DE)
(72) Erfinder: Johannaber, Stefan Jan, 49536 Lienen (DE); Kleine-Hartlage, Hubertus, 49186 Bad Iburg (DE); Rahe, Florian, 49504 Lotte (DE); Albert, Jörn, 49080 Osnabrück (DE)

(56) Entgegenhaltungen:
- EP-A1- 3 152 993
- EP-A1- 3 305 055
- DE-A1- 10 145 927
- DE-A1-102012 111 144

## Beschreibung

Die Erfindung betrifft ein Verfahren zum Erfassen des Einflusses der Neigung eines landwirtschaftlichen Streugeräts auf die Streugutverteilung nach dem Oberbegriff des Patentanspruchs 1, ein Verfahren zum Ausbringen von Streugut mit einem landwirtschaftlichen Streugerät nach dem Oberbegriff des Patentanspruchs 12 und eine Auswerteeinrichtung zum Erfassen des Einflusses der Neigung eines landwirtschaftlichen Streugeräts auf die Streugutverteilung nach dem Oberbegriff des Patentanspruchs 13.

Bei der Verteilung von Streugut auf landwirtschaftlichen Nutzflächen werden landwirtschaftliche Streugeräte eingesetzt, bei welchen Streugut auf eine rotierend angetriebene Verteilscheibe aufgegeben wird, wobei die Verteilscheibe das aufgegebene Streugut beschleunigt und abwirft. Der Aufgabepunkt, also der Bereich, in welchem das Streugut auf die rotierende Verteilscheibe auftrifft, beeinflusst die Streugutverteilung in erheblichem Maße. Aus diesem Grund ist der Aufgabepunkt vor oder während eines Streuvorgangs möglichst präzise einzustellen, damit die beabsichtigte Streugutverteilung umgesetzt wird.

Wenn die Streugutverteilung auf einer geneigten landwirtschaftlichen Nutzfläche erfolgt, ändert sich aufgrund der Neigung des Streugeräts und der freien Fallhöhe des Streuguts der Aufgabepunkt des Streuguts auf der Verteilscheibe, woraus eine Änderung der Streugutverteilung, insbesondere eine Änderung des Abwurfwinkels, resultiert.

Aus den Druckschriften DE 41 34 315 A1, EP 0 540 889 A1 und EP 0 330 839 A1 ist bereits bekannt, dass eine Veränderung des Aufgabepunkts des Streuguts auf die Verteilscheibe eine Veränderung des Abwurfwinkels des Streuguts bedingt.

Um die Veränderung des Aufgabepunkts des Streuguts auf die Verteilscheibe während eines Ausbringvorgangs auf einer geneigten landwirtschaftlichen Nutzfläche auszugleichen, schlägt DE 10 2012 111 144 A1 vor, die oberhalb der Verteilscheibe angeordnete Dosieröffnung für das Streugut in Abhängigkeit der Maschinenneigung einzustellen, um einen gleichmäßigen Durchfluss zu gewährleisten.

Aus der EP 3 152 993 A1 sind landwirtschaftliche Streugeräte bekannt, welche mittels geeigneter Sensoren den Streugutfächer während des Ausbringvorgangs überwachen. Somit kann festgestellt werden, ob die neigungsabhängige Verstellung des Aufgabepunkts tatsächlich zur Einstellung der gewünschten Streugutverteilung führt. Wenn durch die Streufächererfassung festgestellt wird, dass trotz einer neigungsabhängigen Einstellung des Aufgabepunkts eine Fehlausbringung erfolgt, kann eine entsprechende Korrektur des Aufgabepunktes während des Ausbringvorgangs durch das Streugerät vorgenommen werden, sodass die beabsichtigte Streugutverteilung umgesetzt wird.

Die Existenz entsprechender Systeme zeigt bereits, dass der Einfluss der Neigung eines landwirtschaftlichen Streugeräts auf die Streugutverteilung bisher noch nicht mit einer zufriedenstellenden Präzision feststellbar ist. Hiermit geht auch das Problem einher, dass Streugeräte, welche nicht über eine entsprechende Überwachungseinrichtung für den Streufächer verfügen, bisher über keine Steuerungs- oder Regelungseinrichtungen verfügen, welche eine präzise Ausbringung des Streuguts auf einer geneigten landwirtschaftlichen Nutzfläche erlauben.

Aufgabe der vorliegenden Erfindung ist es somit, den Einfluss der Neigung eines landwirtschaftlichen Streugeräts auf die Streugutverteilung präziser ermitteln zu können, sodass Fehlausbringungen auf geneigten landwirtschaftlichen Nutzflächen weiter verringert werden können.

Die Aufgabe wird gelöst durch ein Verfahren zum Erfassen des Einflusses der Neigung eines landwirtschaftlichen Streugeräts auf die Streugutverteilung der eingangs genannten Art, wobei Ausbringinformationen zu Streuvorgängen von landwirtschaftlichen Streugeräten durch eine Auswerteeinrichtung empfangen werden und ein von der Neigung eines landwirtschaftlichen Streugeräts abhängiger Zusammenhang zwischen einem Aufgabepunkt von Streugut auf zumindest eine Verteilscheibe eines landwirtschaftlichen Streugeräts und einer Streugutverteilung durch die Auswerteeinrichtung auf Grundlage der empfangenen Ausbringinformationen ermittelt wird.

Die Erfindung macht sich die Erkenntnis zunutze, dass Ausbringinformationen zu einer Vielzahl von Streuvorgängen von landwirtschaftlichen Streugeräten genutzt werden können, um den Einfluss der Neigung eines landwirtschaftlichen Streugeräts auf die Streugutverteilung präzise ermitteln zu können. Durch das erfindungsgemäße Verfahren werden in der Praxis aufgezeichnete Ausbringinformationen zu Streuvorgängen von unterschiedlichen Streugeräten, zu unterschiedlichen Zeiten und/oder an unterschiedlichen Orten ausgewertet, sodass die sich daraus ergebenden Erkenntnisse den Zusammenhang zwischen dem Aufgabepunkt von Streugut und der Streugutverteilung während der Ausbringung von Streugut auf einer geneigten landwirtschaftlichen Nutzfläche wesentlich präziser widerspiegeln, als dies durch einzelne Laborversuche oder mathematische Berechnungen möglich ist. Die Auswerteeinrichtung, welche die Ausbringinformationen empfängt und auswertet, kann beispielsweise Bestandteil eines zentralen Computersystems, insbesondere einer Servereinrichtung, sein.

Vorzugsweise berücksichtigt der von der Neigung des landwirtschaftlichen Streugeräts abhängige Zusammenhang zwischen dem Aufgabepunkt von Streugut auf die zumindest eine Verteilscheibe des landwirtschaftlichen Streugeräts und der Streugutverteilung auch die Scheibendrehzahl der zumindest einen Verteilscheibe.

In einer bevorzugten Ausführungsform des erfindungsgemäßen Verfahrens umfassen die Ausbringinformationen Angaben zur Neigung des jeweiligen landwirtschaftlichen Streugeräts, Angaben zum eingestellten Aufgabepunkt des Streuguts auf zumindest eine Verteilscheibe des jeweiligen landwirtschaftlichen Streugeräts und/oder Angaben zur Streugutverteilung während des jeweiligen Streuvorgangs. Der Aufgabepunkt beeinflusst die Verweildauer des Streuguts auf der Verteilscheibe und somit die Wurfrichtung des Streuguts. Alternativ oder zusätzlich können die Ausbringinformationen Angaben zur Scheibendrehzahl der zumindest einen Verteilscheibe des jeweiligen landwirtschaftlichen Streugeräts während des jeweiligen Streuvorgangs umfassen. Die Scheibendrehzahl beeinflusst die in das Streugut eingebrachte kinetische Energie und somit die Wurfweite des Streuguts.

Damit die Auswerteeinrichtung den Einfluss der Neigung eines landwirtschaftlichen Streugeräts auf die Streugutverteilung ermitteln kann, sollten die der Ermittlung zugrundeliegenden Ausbringinformationen dazu geeignet sein, einen entsprechenden Zusammenhang zwischen Geräteneigung, Aufgabepunkt und Streugutverteilung erfassen zu können.

In einer Weiterbildung des erfindungsgemäßen Verfahrens umfassen die Angaben zur Streugutverteilung während des jeweiligen Streuvorgangs Angaben zum Abwurfwinkel des Streuguts, Angaben zu Eigenschaften zumindest eines Streufächers und/oder Angaben zu der beabsichtigten und/oder tatsächlichen Arbeitsbreite während des jeweiligen Streuvorgangs. Die Angaben zum Abwurfwinkel während des jeweiligen Streuvorgangs können beispielsweise entsprechende Winkelangaben sein oder Angaben, aus welchen der Abwurfwinkel des Streuguts ermittelbar ist. Die Angaben zu Eigenschaften des zumindest einen Streufächers können beispielsweise Angaben zur Form des Streufächers während des jeweiligen Streuvorgangs umfassen.

Mittels der Scheibendrehzahl oder dem Aufgabepunkt lässt sich beispielsweise die Querverteilung, insbesondere die Wurfrichtung und die Wurfweite, beeinflussen. Damit eine geeignete Beeinflussung der Querverteilung zur Verbesserung des Streuergebnisses umgesetzt werden kann, ist das Erfassen und Aufzeichnen der Querverteilung, insbesondere der Wurfrichtung und der Wurfweite, notwendig. Dies kann beispielsweise mittels einem oder mehreren optischen Sensoren und/oder mittels einem oder mehreren Radarsensoren des jeweiligen Streugeräts erfolgen. Über die Wurfrichtung und die Wurfweite lässt sich somit auch Arbeitsbreite während des Ausbringvorgangs anpassen.

In einer Weiterbildung des erfindungsgemäßen Verfahrens umfassen die Ausbringinformationen Angaben zu dem während des jeweiligen Streuvorgangs verwendeten Verteilscheibentyp und/oder Angaben zu der Verteilscheibenkonfiguration während des jeweiligen Streuvorgangs. Der eingesetzte Verteilscheibentyp beeinflusst die Streugutverteilung in erheblichem Maße. Aus diesem Grund ist es bevorzugt, dass die Auswerteeinrichtung bei der Ermittlung des Einflusses der Neigung eines landwirtschaftlichen Streugeräts auf die Streugutverteilung berücksichtigt, welcher Verteilscheibentyp bei den jeweiligen ausgewerteten Ausbringvorgängen verwendet wurde. Ferner können Verteilscheiben unterschiedliche Konfigurationen aufweisen. Insbesondere können Leit- oder Prallelemente verstellt oder gewechselt werden. Da die Konfiguration von Verteilscheiben die Streugutverteilung ebenfalls in einem erheblichen Maße beeinflusst, ist es bevorzugt, dass die Verteilscheibenkonfiguration bei der Erfassung des Einflusses der Neigung eines landwirtschaftlichen Streugeräts auf die Streugutverteilung ebenfalls berücksichtigt wird.

In einer anderen bevorzugten Ausführungsform des erfindungsgemäßen Verfahrens umfassen die Ausbringinformationen Angaben zu dem Streuguttyp, insbesondere eine Sortenbezeichnung des Streuguts. Die Eigenschaften von Streugut, insbesondere die Korngröße, das Korngewicht, die Kornform und die Oberflächenbeschaffenheit, beeinflussen ebenfalls die Streugutverteilung in einem erheblichen Maße, sodass entsprechende Angaben bei der Ermittlung des Einflusses der Neigung eines landwirtschaftlichen Streugeräts auf die Streugutverteilung ebenfalls zu berücksichtigen sind. Dadurch, dass die der Auswerteeinrichtung zur Verfügung gestellten Ausbringinformationen eine Sortenbezeichnung des ausgebrachten Streuguts umfassen, kann die Auswertung durch die Auswerteeinrichtung sortenspezifisch erfolgen. Eine Verfälschung der Ergebnisse durch abweichende Flugeigenschaften unterschiedlicher Streuguttypen oder -sorten wird somit vermieden.

In einer anderen bevorzugten Ausführungsform des erfindungsgemäßen Verfahrens wird ein neigungsabhängiges Aufgabepunktprofil durch die Auswerteeinrichtung ermittelt, wobei das neigungsabhängige Aufgabepunktprofil landwirtschaftlichen Streugeräten die Einstellung des Aufgabepunkts in Abhängigkeit einer erfassten Neigung erlaubt. Alternativ oder zusätzlich wird das neigungsabhängige Aufgabepunktprofil zum Abruf, insbesondere zum Onlineabruf, durch landwirtschaftliche Streugeräte bereitgestellt. Streugeräte, welche nicht über eine Einrichtung zum Überwachen der Streugutverteilung während des Ausbringvorgangs verfügen, können das neigungsabhängige Aufgabepunktprofil bei der Ausbringung von Streugut auf geneigten landwirtschaftlichen Nutzflächen verwenden, um die Präzision der Streugutausbringung weiter zu erhöhen. Alternativ oder zusätzlich zu dem Ermitteln und Bereitstellen eines neigungsabhängigen Aufgabepunktprofils kann auch ein von der Neigung eines landwirtschaftlichen Streugeräts abhängiger Zusammenhang zwischen dem Aufgabepunkt von Streugut auf zumindest eine Verteilscheibe eines landwirtschaftlichen Streugeräts ermittelt und zum Abruf, insbesondere zum Onlineabruf, durch landwirtschaftliche Streugeräte bereitgestellt werden. Das neigungsabhängige Aufgabepunktprofil kann auch die Scheibendrehzahl berücksichtigen, sodass das neigungsabhängige Aufgabepunktprofil landwirtschaftlichen Streugeräten die Einstellung des Aufgabepunkts und der Scheibendrehzahl in Abhängigkeit einer erfassten Neigung erlaubt. Alternativ oder zusätzlich wird im Rahmen des erfindungsgemäßen Verfahrens ein neigungsabhängiges Scheibendrehzahlprofil durch die Auswerteeinrichtung ermittelt, wobei das neigungsabhängige Scheibendrehzahlprofil landwirtschaftlichen Streugeräten die Einstellung der Scheibendrehzahl in Abhängigkeit einer erfassten Neigung erlaubt.

In einer anderen Ausführungsform des erfindungsgemäßen Verfahrens werden Ausbringinformationen zu einem Streuvorgang durch ein oder mehrere landwirtschaftliche Streugeräte erfasst und/oder aufgezeichnet. Vorzugsweise werden die erfassten und/oder aufgezeichneten Ausbringinformationen von den jeweiligen Streugeräten an die Auswerteeinrichtung gesendet. Das Erfassen und/oder Aufzeichnen der Ausbringinformationen erfolgt vorzugsweise durch unterschiedliche landwirtschaftliche Streugeräte, an unterschiedlichen Orten und/oder zu unterschiedlichen Zeitpunkten. Durch das Senden der erfassten und/oder aufgezeichneten Ausbringinformationen von den jeweiligen Streugeräten an die Auswerteeinrichtung werden der Auswerteeinrichtung die zur Ermittlung des Einflusses der Neigung eines landwirtschaftlichen Streugeräts auf die Streugutverteilung erforderlichen Ausbringinformationen bereitgestellt.

Bevorzugt ist außerdem ein erfindungsgemäßes Verfahren, bei welchem das Erfassen von Ausbringinformationen zu einem Streuvorgang durch ein oder mehrere landwirtschaftliche Streugeräte das Erfassen, insbesondere das kontinuierliche Erfassen, der Neigung des jeweiligen landwirtschaftlichen Streugeräts während des jeweiligen Streuvorgangs umfasst. Das Erfassen der Neigung erfolgt vorzugsweise mittels eines geeigneten Neigungssensors des jeweiligen landwirtschaftlichen Streugeräts. Alternativ oder zusätzlich kann die Neigung des jeweiligen landwirtschaftlichen Streugeräts auch über Kartenmaterial abgeleitet werden, welche Neigungsinformationen beinhaltet. In diesem Fall erfordert die Neigungserfassung üblicherweise die Erfassung des Standorts des jeweiligen landwirtschaftlichen Streugeräts, damit aus dem Kartenmaterial die Neigung an dem Standort des jeweiligen landwirtschaftlichen Streugeräts abgeleitet werden kann. Die Standorterfassung erfolgt vorzugsweise über die Aufzeichnung und/oder Auswertung von GPS-Daten. Alternativ oder zusätzlich umfasst das Erfassen von Ausbringinformationen zu einem Streuvorgang durch ein oder mehrere landwirtschaftliche Streugeräte das Erfassen, insbesondere das kontinuierliche Erfassen des eingestellten Aufgabepunkts des landwirtschaftlichen Streuguts auf zumindest eine Verteilscheibe des jeweiligen landwirtschaftlichen Streugeräts während des jeweiligen Streuvorgangs. Der Aufgabepunkt des Streuguts kann beispielsweise manuell durch den Benutzer des Streugeräts und/oder selbsttätig durch das Streugerät eingestellt werden. Wenn der Aufgabepunkt manuell eingestellt wird, kann das Erfassen des eingestellten Aufgabepunkts das Bereitstellen entsprechender Einstellinformationen durch den Benutzer des Streugeräts, insbesondere mittels einer geeigneten Eingabeeinrichtung, umfassen. Streugeräte, bei welchen der Aufgabepunkt selbsttätig während des Ausbringvorgangs eingestellt wird, weisen üblicherweise eine zur Erfassung des eingestellten Aufgabepunkts geeignete Sensorik auf. Alternativ oder zusätzlich umfasst das Erfassen von Ausbringinformationen zu einem Streuvorgang durch ein oder mehrere landwirtschaftliche Streugeräte das Erfassen, insbesondere das kontinuierliche Erfassen, der Streugutverteilung während des jeweiligen Streuvorgangs. Das Erfassen der Streugutverteilung während des jeweiligen Streuvorgangs kann beispielsweise das Erfassen der Querverteilung und/oder das Erfassen der Längsverteilung des Streuguts während des jeweiligen Streuvorgangs umfassen. Alternativ oder zusätzlich umfasst das Erfassen von Ausbringinformationen zu einem Streuvorgang durch ein oder mehrere landwirtschaftliche Streugeräte das Erfassen, insbesondere das kontinuierliche Erfassen der eingestellten Scheibendrehzahl der zumindest einen Verteilscheibe des jeweiligen landwirtschaftlichen Streugeräts während des jeweiligen Streuvorgangs.

Im Sinne der Erfindung kann unter einem kontinuierlichen Erfassen sowohl ein ununterbrochenes Erfassen als auch ein periodisches Erfassen verstanden werden.

In einer weiteren Ausführungsform des erfindungsgemäßen Verfahrens umfasst das Erfassen, insbesondere das kontinuierliche Erfassen, der Streugutverteilung während des jeweiligen Streuvorgangs das Erfassen, insbesondere das kontinuierliche Erfassen, des Abwurfwinkels und/oder der Flugweite des Streuguts während des jeweiligen Streuvorgangs, das Erfassen, insbesondere das kontinuierliche Erfassen, von Eigenschaften zumindest eines Streufächers während des jeweiligen Streuvorgangs, und/oder das Erfassen, insbesondere das kontinuierliche Erfassen, der beabsichtigten und/oder tatsächlichen Arbeitsbreite während des jeweiligen Streuvorgangs. Insbesondere erfolgt das Erfassen des Abwurfwinkels, der Flugweite, der Eigenschaften des zumindest einen Streufächers und/oder der tatsächlichen Arbeitsbreite mittels einem oder mehrerer Sensoren, insbesondere optischer Sensoren und/oder Radarsensoren. Der eine oder die mehreren Sensoren sind vorzugsweise oberhalb der zumindest einen Verteilscheibe angeordnet und dazu eingerichtet, das abgeworfene Streugut zu erfassen. Insbesondere ist der eine oder sind die mehreren Sensoren an einem Streugutbehälter des landwirtschaftlichen Streugeräts angeordnet und/oder befestigt und/oder dazu eingerichtet, die Form des Streufächers zu erfassen. Die Flugweite des Streuguts wird insbesondere über eine erfasste Veränderung der Geschwindigkeit des ausgeworfenen Streuguts während des jeweiligen Streuvorgangs ermittelt.

Das erfindungsgemäße Verfahren wird ferner dadurch vorteilhaft weitergebildet, dass das Erfassen von Ausbringinformationen zu einem Streuvorgang durch ein oder mehrere landwirtschaftliche Streugeräte das Erfassen des während des jeweiligen Streuvorgangs verwendeten Verteilscheibentyps und/oder das Erfassen der Verteilscheibenkonfiguration während des jeweiligen Streuvorgangs umfasst. Das Erfassen des während des jeweiligen Streuvorgangs verwendeten Verteilscheibentyps kann beispielsweise durch eine Ausleseeinrichtung erfolgen, welche dazu eingerichtet ist, einen Informationsträger einer montierten Verteilscheibe auszulesen. Alternativ oder zusätzlich kann das Erfassen des während des jeweiligen Streuvorgangs verwendeten Verteilscheibentyps über eine manuelle Eingabe entsprechender Informationen durch einen Benutzer erfolgen, insbesondere unter Verwendung einer Eingabeeinrichtung des jeweiligen landwirtschaftlichen Streugeräts.

In einer Weiterbildung des erfindungsgemäßen Verfahrens umfasst das Erfassen von Ausbringinformationen zu einem Streuvorgang durch ein oder mehrere landwirtschaftliche Streugeräte das Bereitstellen einer Eingabemöglichkeit für einen Benutzer, welche es dem Benutzer erlaubt, einen Streuguttyp, insbesondere eine Sortenbezeichnung, des auszubringenden oder des ausgebrachten Streuguts bereitzustellen. Vorzugsweise ermöglicht eine Eingabeeinrichtung des jeweiligen landwirtschaftlichen Streugeräts eine manuelle Bereitstellung entsprechender Informationen durch einen Benutzer. Die Eingabeeinrichtung kann beispielsweise als Touchscreen ausgebildet sein und/oder ein oder mehrere Druckknöpfe und/oder Tasten umfassen.

In einer bevorzugten Ausführungsform des erfindungsgemäßen Verfahrens erfolgt das Senden der erfassten und/oder aufgezeichneten Ausbringinformationen von den jeweiligen Streugeräten an die Auswerteeinrichtung zumindest teilweise kabellos, insbesondere über Funk. Beispielsweise erfolgt das Senden unter Verwendung von Mobilfunk. Beispielsweise können die erfassten und/oder aufgezeichneten Ausbringinformationen direkt von den jeweiligen Streugeräten an die Auswerteeinrichtung gesendet werden. Alternativ oder zusätzlich können die erfassten und/oder aufgezeichneten Ausbringinformationen von den jeweiligen Streugeräten zunächst an ein Zwischengerät gesendet werden, welches die Ausbringinformationen dann an die Auswerteeinrichtung weiterleitet. Als Zwischengeräte kommen beispielsweise mobile Endgeräte, insbesondere Mobilfunkgeräte, in Frage.

Die der Erfindung zugrundeliegende Aufgabe wird ferner durch ein Verfahren zum Ausbringen von Streugut der eingangs genannten Art gelöst, wobei das erfindungsgemäße Verfahren das Abrufen eines von der Neigung eines landwirtschaftlichen Streugeräts abhängigen Zusammenhangs zwischen einem Aufgabepunkt von Streugut auf zumindest eine Verteilscheibe des landwirtschaftlichen Streugeräts und einer Streugutverteilung umfasst, wobei der Zusammenhang unter Anwendung des Verfahrens zum Erfassen des Einflusses der Neigung eines landwirtschaftlichen Streugeräts auf die Streugutverteilung ermittelt wurde.

Vorzugsweise erfolgt das selbsttätige Einstellen des Aufgabepunkt des Streuguts auf die zumindest eine Verteilscheibe in Abhängigkeit der erfassten Neigung des landwirtschaftlichen Streugeräts gemäß dem abgerufenen von der Neigung des landwirtschaftlichen Streugeräts abhängigen Zusammenhang zwischen dem Aufgabepunkt von Streugut auf die zumindest eine Verteilscheibe des landwirtschaftlichen Streugeräts und der Streugutverteilung.

Zusätzlich zu dem Aufgabepunkt des Streuguts auf die zumindest eine Verteilscheibe können auch andere Einstellparameter, wie etwa die Scheibendrehzahl, des Streugeräts in Abhängigkeit der erfassten Neigung des landwirtschaftlichen Streugeräts während des Ausbringens des landwirtschaftlichen Streuguts auf die landwirtschaftliche Nutzfläche eingestellt werden. Beispielsweise umfasst das Verfahren das selbsttätige Einstellen der Scheibendrehzahl der zumindest einen Verteilscheibe in Abhängigkeit der erfassten Neigung des landwirtschaftlichen Streugeräts während des Ausbringens des Streuguts auf die landwirtschaftliche Nutzfläche. Vorzugsweise erfolgt das selbsttätige Einstellen der Scheibendrehzahl der zumindest einen Verteilscheibe in Abhängigkeit der erfassten Neigung des landwirtschaftlichen Streugeräts gemäß dem abgerufenen von der Neigung des landwirtschaftlichen Streugeräts abhängigen Zusammenhang zwischen der Scheibendrehzahl der zumindest einen Verteilscheibe des landwirtschaftlichen Streugeräts und der Streugutverteilung.

Der abgerufene Zusammenhang zwischen einem Aufgabepunkt von Streugut auf zumindest eine Verteilscheibe eines landwirtschaftlichen Streugeräts und einer Streugutverteilung basiert auf bereitgestellten Ausbringinformationen von einer Vielzahl von unterschiedlichen Streugeräten und ist aus diesem Grund äußerst präzise. Die Berücksichtigung dieses Zusammenhangs beim selbsttätigen Einstellen des Aufgabepunkts des Streuguts auf zumindest eine Verteilscheibe in Abhängigkeit der erfassten Neigung des landwirtschaftlichen Streugeräts führt somit zu einer äußerst präzisen Ausbringung des Streuguts, ohne dass dabei die Überwachung des Streufächers für eine nachgeschaltete Korrektursteuerung oder Korrekturregelung notwendig ist. Das erfindungsgemäße Verfahren zu m Ausbringen von Streugut erlaubt somit auch Streugeräten, welche nicht über eine sensorische Streufächererfassung verfügen, eine äußerst präzise Ausbringung des Streuguts auf geneigten landwirtschaftlichen Nutzflächen.

Die der Erfindung zugrundeliegende Aufgabe wird ferner durch eine Auswerteeinrichtung der eingangs genannten Art gelöst, wobei die erfindungsgemäße Auswerteeinrichtung eine Empfangseinrichtung und eine Berechnungseinrichtung aufweist. Die Empfangseinrichtung ist dazu eingerichtet, Ausbringinformationen zu Streuvorgängen von landwirtschaftlichen Streugeräten zu empfangen. Die Berechnungseinrichtung ist dazu eingerichtet, auf Grundlage der empfangenen Ausbringinformationen einen von der Neigung des landwirtschaftlichen Streugeräts abhängigen Zusammenhang zwischen einem Aufgabepunkt von Streugut auf zumindest eine Verteilscheibe eines landwirtschaftlichen Streugeräts und einer Streugutverteilung zu ermitteln. Der von der Neigung des landwirtschaftlichen Streugeräts abhängige Zusammenhang zwischen dem Aufgabepunkt von Streugut auf die zumindest eine Verteilscheibe des landwirtschaftlichen Streugeräts und der Streugutverteilung kann auch die Scheibendrehzahl der zumindest einen Verteilscheibe des landwirtschaftlichen Streugeräts berücksichtigen.

Mittels der erfindungsgemäßen Auswerteeinrichtung werden somit Ausbringinformationen zu einer Vielzahl von Streuvorgängen gesammelt und ausgewertet, um den Zusammenhang zwischen Geräteneigung, Aufgabepunkt und Streugutverteilung möglichst präzise bestimmen zu können. Die Auswerteeinrichtung ist vorzugsweise als Bestandteil eines zentralen Computersystems, beispielsweise einer Servereinrichtung, ausgebildet.

Die erfindungsgemäße Auswerteeinrichtung wird ferner dadurch vorteilhaft weitergebildet, dass die Berechnungseinrichtung dazu eingerichtet ist, ein neigungsabhängiges Aufgabepunktprofil zu ermitteln, wobei das neigungsabhängige Aufgabepunktprofil landwirtschaftlichen Streugeräten die Einstellung des Aufgabepunkts in Abhängigkeit einer erfassten Neigung erlaubt. Vorzugsweise erlaubt die Auswerteeinrichtung den Abruf, insbesondere den Onlineabruf des ermittelten Zusammenhangs zwischen Geräteneigung, Aufgabepunkt und Streugutverteilung und/oder den Abruf, insbesondere den Onlineabruf, des ermittelten neigungsabhängigen Aufgabepunktprofils. Das neigungsabhängige Aufgabepunktprofil kann auch die Scheibendrehzahl berücksichtigen, sodass das neigungsabhängige Aufgabepunktprofil landwirtschaftlichen Streugeräten die Einstellung des Aufgabepunkts und der Scheibendrehzahl in Abhängigkeit einer erfassten Neigung erlaubt. Alternativ oder zusätzlich ist die Berechnungseinrichtung dazu eingerichtet, ein neigungsabhängiges Scheibendrehzahlprofil zu ermitteln, wobei das neigungsabhängige Scheibendrehzahlprofil landwirtschaftlichen Streugeräten die Einstellung der Scheibendrehzahl in Abhängigkeit einer erfassten Neigung erlaubt.

In einer Weiterbildung der erfindungsgemäßen Auswerteeinrichtung ist diese dazu eingerichtet, in einem Verfahren zum Erfassen des Einflusses der Neigung eines landwirtschaftlichen Streugeräts auf die Streugutverteilung nach einer der vorstehend beschriebenen Ausführungsformen verwendet zu werden. Hinsichtlich der Vorteile und Modifikationen einer entsprechenden Auswerteeinrichtung wird auf die Vorteile und Modifikationen des erfindungsgemäßen Verfahrens zum Erfassen des Einflusses der Neigung eines landwirtschaftlichen Streugeräts auf die Streugutverteilung verwiesen.

Die erfindungsgemäße Auswerteeinrichtung kann beispielsweise in einem System eingesetzt werden, welches neben der Auswerteeinrichtung eine Mehrzahl von Streugeräten umfasst. Die jeweiligen Streugeräte können beispielsweise eine Einrichtung zum Überwachen der Streugutverteilung aufweisen, welche dazu eingerichtet ist, die Neigung des jeweiligen landwirtschaftlichen Streugeräts, den Abwurfwinkel und/oder der Flugweite des Streuguts des jeweiligen Streugeräts und/oder Eigenschaften zumindest eines Streufächers des jeweiligen Streugeräts während des Ausbringvorgangs zu erfassen. Alternativ oder zusätzlich können die jeweiligen Streugeräte eine Sendeeinrichtung umfassen, welche dazu eingerichtet ist, die erfassten Ausbringinformationen an eine Auswerteeinrichtung zu senden. Alternativ oder zusätzlich können die jeweiligen Streugeräte eine Abrufeinrichtung umfassen, welche dazu eingerichtet ist, einen von der Neigung eines landwirtschaftlichen Streugeräts abhängigen Zusammenhang zwischen einem Aufgabepunkt von Streugut auf zumindest eine Verteilscheibe eines landwirtschaftlichen Streugeräts und einer Streugutverteilung, insbesondere durch einen Onlineabruf, abzurufen. Alternativ oder zusätzlich können die jeweiligen Streugeräte eine Einstelleinrichtung aufweisen, welche dazu eingerichtet ist, den Aufgabepunkt des Streuguts auf zumindest eine Verteilscheibe in Abhängigkeit des abgerufenen Zusammenhangs selbsttätig einzustellen. Die Flugweite des Streuguts wird insbesondere über eine erfasste Veränderung der Geschwindigkeit des ausgeworfenen Streuguts während des jeweiligen Streuvorgangs ermittelt.

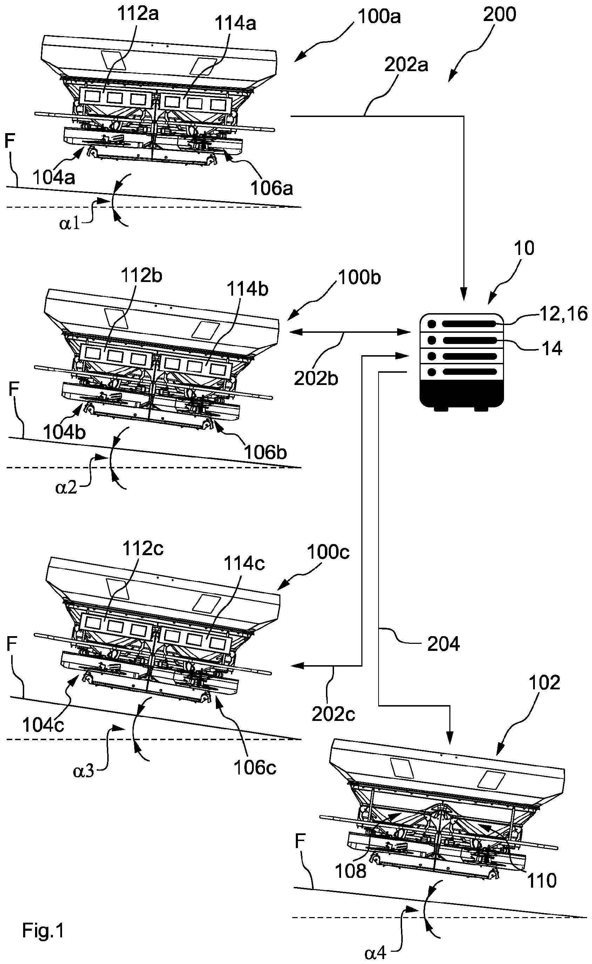

Nachfolgend wird eine bevorzugte Ausführungsform der Erfindung unter Bezugnahme auf die beiliegende Zeichnung näher erläutert und beschrieben. Dabei zeigt die
- Figur: ein System mit einer erfindungsgemäßen Auswerteeinrichtung in einer schematischen Darstellung.

Gemäß der Figur umfasst das System 200 eine Auswerteeinrichtung 10 und mehrere als Düngerstreuer ausgebildete landwirtschaftliche Streugeräte 100a-100c, 102. Die Auswerteeinrichtung 10 ist Bestandteil eines zentralen Computersystems.

Die Streugeräte 100a-100c führen zusammen mit der Auswerteeinrichtung 10 ein **Verfahren zum Erfassen des Einflusses der Neigung α1-α4 eines** landwirtschaftlichen Streugeräts 100a-100c, 102 auf die Streugutverteilung aus.

Die Streugeräte 100a-100c weisen jeweils zwei nebeneinander angeordnete Verteilscheiben 104a-104c, 106a-106c auf, auf welche über ein Dosiersystem Streugut, nämlich Dünger, aufgegeben wird. Der Aufgabepunkt des Streuguts auf die jeweiligen Verteilscheiben 104a-104c, 106a-106c ist zum Anpassen der Streugutverteilung veränderbar. Außerdem weisen die Streugeräte 100a-100c jeweils Einrichtungen 112a-112c, 114a-114c zum Überwachen der Streugutverteilung auf. Die Einrichtungen 112a-112c, 114a-114c sind jeweils oberhalb einer Verteilscheibe 104a-104c, 106a-106c angeordnet und weisen jeweils mehrere optische Sensoren zum Erfassen des Streufächers auf. Über die optischen Sensoren werden auch der Abwurfwinkel und die Flugweite des Streuguts während des Ausbringvorgangs erfasst.

Die landwirtschaftlichen Nutzflächen F, auf welche die Streugeräte 100a-100c Streugut ausbringen, weisen jeweils eine Neigung **α**1-**α**3 auf, sodass die Streugeräte 100a-100c während der Ausbringung ebenfalls entsprechend geneigt sind. Die Streugeräte 100a-100c weisen außerdem Neigungssensoren auf, über welche die aktuelle Geräteneigung erfasst werden kann.

Die Streugeräte 100a-100c zeichnen während des Ausbringvorgangs Ausbringinformationen zu dem ausgeführten Streuvorgang auf. Das Erfassen der Ausbringinformationen umfasst dabei das kontinuierliche Erfassen der Neigung **α1-α3 des jeweiligen landwirtschaftlichen Streugeräts** 100a-100c, das kontinuierliche Erfassen des eingestellten Aufgabepunkts des Streuguts auf die Verteilscheiben 104a-104c, 106a-106c des jeweiligen landwirtschaftlichen Streugeräts 100a-100c und das kontinuierliche Erfassen der Streugutverteilung während des jeweiligen Streuvorgangs. Im Rahmen der kontinuierlichen Erfassung der Streugutverteilung wird sowohl die jeweilige Querverteilung als auch die jeweilige Längsverteilung des Streuguts kontinuierlich erfasst. Ferner werden der jeweilige Abwurfwinkel und die Flugweite des Streuguts kontinuierlich erfasst.

Darüber hinaus wird durch die Streugeräte 100a-100c erfasst, welcher Verteilscheibentyp zur Streugutausbringung verwendet wird und welche Düngersorte ausgebracht wird. Hierzu weisen die Streugeräte 100a-100c jeweils eine als Touchscreen ausgebildete Eingabeeinrichtung auf, über welche der Benutzer den Verteilscheibentyp und die Düngersorte eingeben kann. Beispielsweise wird dem Benutzer eine Liste mit Verteilscheibentypen und/oder Düngersorten angezeigt, aus welcher er den verwendeten Verteilscheibentyp und die ausgebrachte oder noch auszubringende Düngersorte auswählen kann.

Die von den Streugeräten 100a-100c aufgezeichneten und erfassten Ausbringinformationen werden dann von den jeweiligen Streugeräten 100a-100c an die Auswerteeinrichtung 10 gesendet. Das Senden der Ausbringinformationen von den jeweiligen Streugeräten 100a-100c an die Auswerteeinrichtung 10 erfolgt kabellos über die Funkverbindungen 202a-202c.

Die Auswerteeinrichtung 10 ist dazu eingerichtet, **den Einfluss der Neigung α1-α4** eines landwirtschaftlichen Streugeräts 100a-100c, 102 auf die Streugutverteilung zu erfassen. Hierzu weist die Auswerteeinrichtung 10 eine Empfangseinrichtung 12 auf, mittels welcher die Auswerteeinrichtung 10 die von den Streugeräte 100a-100c versendeten Ausbringinformationen empfängt. Die empfangenen Ausbringinformationen der Streugeräte 100a-100c umfassen Angaben zur **Neigung α1-α3 des jeweiligen landwirtschaftlichen Streugeräts 100a-**100c**,** Angaben zu den eingestellten Aufgabepunkten des Streuguts auf die Verteilscheiben 104a-104c, 106a-106c des jeweiligen landwirtschaftlichen Streugeräts 100a-100c und Angaben zur Streugutverteilung während des jeweiligen Streuvorgangs. Die Angaben zur Streugutverteilung während des jeweiligen Streuvorgangs umfassen Angaben zum Abwurfwinkel und zur Flugweite des Streuguts. Die Ausbringinformationen umfassen außerdem Angaben zu dem während des jeweiligen Streuvorgangs verwendeten Verteilscheibentyp und Angaben zu der ausgebrachten Düngersorte.

Ferner weist die Auswerteeinrichtung 10 eine Berechnungseinrichtung 14 auf, mittels welcher die Auswerteeinrichtung 10 auf Grundlage der empfangenen **Ausbringinformationen einen von der Neigung α1-α4 eines landwirtschaftlichen** Streugeräts 100a-100c, 102 abhängigen Zusammenhang zwischen einem Aufgabepunkt von Streugut auf eine Verteilscheibe 104a-104c, 106a-106c, 108, 110 eines landwirtschaftlichen Streugeräts 100a-100c, 102 und einer Streugutverteilung ermittelt.

Die Berechnungseinrichtung 14 der Auswerteeinrichtung berechnet auf Grundlage der empfangenen Ausbringinformationen neigungsabhängige Aufgabepunktprofile, welche es landwirtschaftlichen Streugeräten 100a-100c, 102 erlauben, den Aufgabepunkt i**n Abhängigkeit einer erfassten Neigung α1-α4** einzustellen. Die neigungsabhängigen Aufgabepunktprofile werden dann durch die Auswerteeinrichtung zum Onlineabruf für landwirtschaftliche Streugeräte 100a-100c, 102 bereitgestellt.

Das Streugerät 102 weist ebenfalls zwei Verteilscheiben 108, 110 auf, verfügt jedoch nicht über eine Einrichtung zum Überwachen der Streugutverteilung, sodass eine infolge eines geneigten Abschnitts der landwirtschaftlichen Nutzfläche F auftretende unerwartete Fehlausbringung nicht festgestellt und korrigiert werden kann. Die Ausbringpräzision des Streugeräts 102 auf einer geneigten Fläche ist somit in einem erheblichen Maße von einem geräteintern hinterlegten Zusammenhang zwischen Geräteneigung, Aufgabepunkt und Streugutverteilung abhängig.

Die Auswerteeinrichtung 10 stellt mit den erzeugten Aufgabepunktprofilen derartige Zusammenhänge zum Onlineabruf bereit. Die bereitgestellten Aufgabepunktprofile definieren den Zusammenhang zwischen Geräteneigung, Aufgabepunkt und Streugutverteilung aufgrund der großen Menge der der Berechnung der Aufgabenprofile zugrundeliegenden Daten bzw. Informationen äußerst präzise.

Das Streugerät 102 weist eine Abrufeinrichtung auf, mittels welcher entsprechende Aufgabepunktprofile von der Auswerteeinrichtung 10 aufrufbar sind. Die Auswerteeinrichtung 10 umfasst eine Sendeeinrichtung 16 zum Versenden der ermittelten Aufgabepunktprofile. Die Datenübertragung zwischen der Auswerteeinrichtung 10 und dem Streugerät 102 erfolgt über die Funkverbindung 204. Außerdem weist das Streugerät 102 eine Einstelleinrichtung auf, welche dazu eingerichtet ist, den Aufgabepunkt des Streuguts auf die Verteilscheiben 108, 110 in Abhängigkeit des abgerufenen Aufgabepunktprofils selbsttätig einzustellen.

Somit profitiert das Streugerät 102 von der Sensorik der Streugeräte 100a-100c, wodurch die Ausbringpräzision des Streugeräts 102 auf geneigten landwirtschaftlichen Nutzflächen F gesteigert wird.

Im Übrigen weisen auch die Streugeräte 100a-100c jeweils eine Abrufeinrichtung auf, mittels welcher entsprechende Aufgabepunktprofile von der Auswerteeinrichtung 10 aufrufbar sind.

### Bezuqszeichen

- 10: Auswerteeinrichtung
- 12: Empfangseinrichtung
- 14: Berechnungseinrichtung
- 16: Sendeeinrichtung

- 100a-100c: landwirtschaftliche Streugeräte
- 102: landwirtschaftliches Streugerät
- 104a-104c: Verteilscheiben
- 106a-106c: Verteilscheiben
- 108: Verteilscheibe
- 110: Verteilscheibe
- 112a-112c: Einrichtungen zur Überwachung der Streugutverteilung
- 114a-114c: Einrichtungen zur Überwachung der Streugutverteilung

- 200: System
- 202a-202c: Funkverbindungen
- 204: Funkverbindung

- F: landwirtschaftliche Nutzflächen
- α1-α4: Neigungen

## Patentansprüche

1. Verfahren zum Erfassen des Einflusses der Neigung (α1-α4) eines landwirtschaftlichen Streugeräts (100a-100c, 102) auf die Streugutverteilung, **gekennzeichnet durch** die Schritte:
- Empfangen von Ausbringinformationen zu Streuvorgängen von landwirtschaftlichen Streugeräten (100a-100c) durch eine Auswerteeinrichtung (10); und
- Ermitteln eines von der Neigung (α1-α4) eines landwirtschaftlichen Streugeräts (100a-100c, 102) abhängigen Zusammenhangs zwischen einem Aufgabepunkt von Streugut auf zumindest eine Verteilscheibe (104a-104c, 106a-106c, 108, 110) eines landwirtschaftlichen Streugeräts (100a-100c, 102) und einer Streugutverteilung durch die Auswerteeinrichtung (10) auf Grundlage der empfangenen Ausbringinformationen.

2. Verfahren nach Anspruch 1,
**dadurch gekennzeichnet, dass** die Ausbringinformationen Angaben zur Neigung (α1-α3) des jeweiligen landwirtschaftlichen Streugeräts (100a-100c), Angaben zum eingestellten Aufgabepunkt des Streuguts auf zumindest eine Verteilscheibe (104a-104c, 106a-106c) des jeweiligen landwirtschaftlichen Streugeräts (100a-100c) und/oder Angaben zur Streugutverteilung während des jeweiligen Streuvorgangs umfassen.

3. Verfahren nach Anspruch 2,
**dadurch gekennzeichnet, dass** die Angaben zur Streugutverteilung während des jeweiligen Streuvorgangs Angaben zum Abwurfwinkel und/oder der Flugweite des Streuguts, Angaben zu Eigenschaften zumindest eines Streufächers und/oder Angaben zu der beabsichtigten und/oder tatsächlichen Arbeitsbreite während des jeweiligen Streuvorgangs umfassen.

4. Verfahren nach einem der vorstehenden Ansprüche,
**dadurch gekennzeichnet, dass** die Ausbringinformationen Angaben zu dem während des jeweiligen Streuvorgangs verwendeten Verteilscheibentyp und/oder Angaben zu der Verteilscheibenkonfiguration während des jeweiligen Streuvorgangs umfassen.

5. Verfahren nach einem der vorstehenden Ansprüche,
**dadurch gekennzeichnet, dass** die Ausbringinformationen Angaben zu dem Streuguttyp, insbesondere eine Sortenbezeichnung des Streuguts, umfassen.

6. Verfahren nach einem der vorstehenden Ansprüche,
**gekennzeichnet durch** zumindest einen der folgenden Schritte:
- Ermitteln eines neigungsabhängigen Aufgabepunktprofils durch die Auswerteeinrichtung (10), wobei das neigungsabhängige Aufgabepunktprofil landwirtschaftlichen Streugeräten (100a-100c, 102) die Einstellung des Aufgabepunktes in Abhängigkeit einer erfassten Neigung (α1-α4) erlaubt;
- Bereitstellen des neigungsabhängigen Aufgabepunktprofils zum Abruf, insbesondere zum Onlineabruf, durch landwirtschaftliche Streugeräte (100a-100c, 102).

7. Verfahren nach einem der vorstehenden Ansprüche,
**gekennzeichnet durch** zumindest einen der folgenden Schritte:
- Erfassen und/oder Aufzeichnen von Ausbringinformationen zu einem Streuvorgang durch ein oder mehrere landwirtschaftliche Streugeräte (100a-100c);
- Senden der erfassten und/oder aufgezeichneten Ausbringinformationen von den jeweiligen Streugeräten (100a-100c) an die Auswerteeinrichtung (10).

8. Verfahren nach Anspruch 7,
**dadurch gekennzeichnet, dass** das Erfassen von Ausbringinformationen zu einem Streuvorgang durch ein oder mehrere landwirtschaftliche Streugeräte (100a-100c) zumindest einen der folgenden Schritte umfasst:
- Erfassen, insbesondere kontinuierliches Erfassen, der Neigung (α1-α3) des jeweiligen landwirtschaftlichen Streugeräts (100a-100c) während des jeweiligen Streuvorgangs;
- Erfassen, insbesondere kontinuierliches Erfassen, des eingestellten Aufgabepunkts des Streuguts auf zumindest eine Verteilscheibe (104a-104c, 106a-106c) des jeweiligen landwirtschaftlichen Streugeräts (100a-100c) während des jeweiligen Streuvorgangs;
- Erfassen, insbesondere kontinuierliches Erfassen, der Streugutverteilung während des jeweiligen Streuvorgangs.

9. Verfahren nach Anspruch 8,
**dadurch gekennzeichnet, dass** das Erfassen, insbesondere das kontinuierliche Erfassen, der Streugutverteilung während des jeweiligen Streuvorgangs zumindest einen der folgenden Schritte umfasst:
- Erfassen, insbesondere kontinuierliches Erfassen, des Abwurfwinkels und/oder der Flugweite des Streuguts während des jeweiligen Streuvorgangs;
- Erfassen, insbesondere kontinuierliches Erfassen, von Eigenschaften zumindest eines Streufächers während des jeweiligen Streuvorgangs;
- Erfassen, insbesondere kontinuierliches Erfassen, der beabsichtigten und/oder tatsächlichen Arbeitsbreite während des jeweiligen Streuvorgangs.

10. Verfahren nach einem der Ansprüche 7 bis 9,
**dadurch gekennzeichnet, dass** das Erfassen von Ausbringinformationen zu einem Streuvorgang durch ein oder mehrere landwirtschaftliche Streugeräte (100a-100c) zumindest einen der folgenden Schritte umfasst:
- Erfassen des während des jeweiligen Streuvorgangs verwendeten Verteilscheibentyps;
- Erfassen der Verteilscheibenkonfiguration während des jeweiligen Streuvorgangs.

11. Verfahren nach einem der Ansprüche 7 bis 10,
**dadurch gekennzeichnet, dass** das Senden der erfassten und/oder aufgezeichneten Ausbringinformationen von den jeweiligen Streugeräten (100a-100c) an die Auswerteeinrichtung (10) zumindest teilweise kabellos, insbesondere über Funk, erfolgt.

12. Verfahren zum Ausbringen von Streugut mit einem landwirtschaftlichen Streugerät (100a-100c, 102), mit den Schritten:
- Erfassen, insbesondere kontinuierliches Erfassen, der Neigung (α1-α4) des landwirtschaftlichen Streugeräts (100a-100c, 102) während des Ausbringens des Streuguts auf eine landwirtschaftliche Nutzfläche (F);
- selbsttätiges Einstellen des Aufgabepunkt des Streuguts auf zumindest eine Verteilscheibe (104a-104c, 106a-106c, 108, 110) in Abhängigkeit der erfassten Neigung (α1-α4) des landwirtschaftlichen Streugeräts (100a-100c, 102) während des Ausbringens des Streuguts auf die landwirtschaftliche Nutzfläche (F);
- Abrufen eines von der Neigung (α1-α4) eines landwirtschaftlichen Streugeräts (100a-100c, 102) abhängigen Zusammenhangs zwischen einem Aufgabepunkt von Streugut auf zumindest eine Verteilscheibe (104a-104c, 106a-106c, 108, 110) eines landwirtschaftlichen Streugeräts (100a-100c, 102) und einer Streugutverteilung, **dadurch gekennzeichnnet, dass** der Zusammenhang unter Anwendung des Verfahrens zum Erfassen des Einflusses der Neigung (α1-α4) eines landwirtschaftlichen Streugeräts (100a-100c, 102) auf die Streugutverteilung nach einem der vorstehenden Ansprüche ermittelt wurde.

13. Auswerteeinrichtung (10) zum Erfassen des Einflusses der Neigung (α1-α4) eines landwirtschaftlichen Streugeräts (100a-100c, 102) auf die Streugutverteilung, **gekennzeichnet durch**:
- eine Empfangseinrichtung (12), welche dazu eingerichtet ist, Ausbringinformationen zu Streuvorgängen von landwirtschaftlichen Streugeräten (100a-100c) zu empfangen; und
- eine Berechnungseinrichtung (14), welche dazu eingerichtet ist, auf Grundlage der empfangenen Ausbringinformationen einen von der Neigung (α1-α4) eines landwirtschaftlichen Streugeräts (100a-100c, 102) abhängigen Zusammenhang zwischen einem Aufgabepunkt von Streugut auf zumindest eine Verteilscheibe (104a-104c, 106a-106c, 108, 110) eines landwirtschaftlichen Streugeräts (100a-100c, 102) und einer Streugutverteilung zu ermitteln.

14. Auswerteeinrichtung (10) nach Anspruch 13,
**dadurch gekennzeichnet, dass** die Berechnungseinrichtung (14) dazu eingerichtet ist, ein neigungsabhängiges Aufgabepunktprofil zu ermitteln, wobei das neigungsabhängige Aufgabepunktprofil landwirtschaftlichen Streugeräten (100a-100c, 102) die Einstellung des Aufgabepunktes in Abhängigkeit einer erfassten Neigung (α1-α4) erlaubt.

15. Auswerteeinrichtung (10) nach Anspruch 13 oder 14,
**dadurch gekennzeichnet, dass** die Auswerteeinrichtung (10) dazu eingerichtet ist, in einem Verfahren zum Erfassen des Einflusses der Neigung (α1-α4) eines landwirtschaftlichen Streugeräts (100a-100c, 102) auf die Streugutverteilung nach einem der Ansprüche 1 bis 11 verwendet zu werden.

## Claims

1. Method for detecting the influence of the inclination (α1-α4) of an agricultural spreader (100a-100c, 102) on the distribution of material to be spread, **characterized by** the steps of:
- receiving discharge information on spreading processes from agricultural spreaders (100a-100c) by an evaluation device (10); and
- ascertaining a relationship, dependent on the inclination (α1-α4) of an agricultural spreader (100a-100c, 102), between a dispensing point of material to be spread onto at least one distribution disc (104a-104c, 106a-106c, 108, 110) of an agricultural spreader (100a-100c, 102) and a distribution of material to be spread by the evaluation device (10) on the basis of the received discharge information.

2. Method according to Claim 1,
**characterized in that** the discharge information includes indications of the inclination (α1-α3) of the respective agricultural spreader (100a-100c), indications of the set dispensing point of the material to be spread onto at least one distribution disc (104a-104c, 106a-106c) of the respective agricultural spreader (100a-100c) and/or indications of the distribution of material to be spread during the respective spreading process.

3. Method according to Claim 2,
**characterized in that** the indications of the distribution of material to be spread during the respective spreading process include indications of the ejection angle and/or the flying range of the material to be spread, indications of the properties of at least one spreading fan and/or indications of the intended and/or actual working width during the respective spreading process.

4. Method according to one of the preceding claims, **characterized in that** the discharge information includes indications of the type of distribution disc used during the respective spreading process and/or indications of the configuration of the distribution disc during the respective spreading process.

5. Method according to one of the preceding claims, **characterized in that** the discharge information includes indications of the type of material to be spread, in particular a class designation of the material to be spread.

6. Method according to one of the preceding claims, **characterized by** at least one of the following steps:
- ascertaining an inclination-dependent dispensing point profile by the evaluation device (10), wherein the inclination-dependent dispensing point profile allows agricultural spreaders (100a-100c, 102) to set the dispensing point in dependence on a detected inclination (α1-α4);
- providing the inclination-dependent dispensing point profile for retrieval, in particular for online retrieval, by agricultural spreaders (100a-100c, 102).

7. Method according to one of the preceding claims, **characterized by** at least one of the following steps:
- detecting and/or recording discharge information on a spreading process by one or more agricultural spreaders (100a-100c); or
- sending the detected and/or recorded discharge information from the respective spreaders (100a-100c) to the evaluation device (10).

8. Method according to Claim 7,
**characterized in that** the detection of discharge information on a spreading process by one or more agricultural spreaders (100a-100c) comprises at least one of the following steps:
- detecting, in particular continuously detecting, the inclination (α1-α3) of the respective agricultural spreader (100a-100c) during the respective spreading process;
- detecting, in particular continuously detecting, the set dispensing point of the material to be spread onto at least one distribution disc (104a-104c, 106a-106c) of the respective agricultural spreader (100a-100c) during the respective spreading process;
- detecting, in particular continuously detecting, the distribution of material to be spread during the respective spreading process.

9. Method according to Claim 8,
**characterized in that** the detection, in particular the continuous detection, of the distribution of material to be spread during the respective spreading process comprises at least one of the following steps:
- detecting, in particular continuously detecting, the ejection angle and/or the flying range of the material to be spread during the respective spreading process;
- detecting, in particular continuously detecting, properties of at least one spreading fan during the respective spreading process;
- detecting, in particular continuously detecting, the intended and/or actual working width during the respective spreading process.

10. Method according to one of Claims 7 to 9, **characterized in that** the detection of discharge information on a spreading process by one or more agricultural spreaders (100a-100c) comprises at least one of the following steps:
- detecting the type of distribution disc used during the respective spreading process;
- detecting the configuration of the distribution disc during the respective spreading process.

11. Method according to one of Claims 7 to 10, **characterized in that** the sending of the detected and/or recorded discharge information from the respective spreaders (100a-100c) to the evaluation device (10) is performed at least partially wirelessly, in particular via radio communication.

12. Method for discharging material to be spread with an agricultural spreader (100a-100c, 102), comprising the steps of:
- detecting, in particular continuously detecting, the inclination (α1-α4) of the agricultural spreader (100a-100c, 102) during the discharge of material to be spread on a usable agricultural area (F) ;
- automatically setting the dispensing point of the material to be spread onto at least one distribution disc (104a-104c, 106a-106c, 108, 110) in dependence on the detected inclination (α1-α4) of the agricultural spreader (100a-100c, 102) during the discharge of the material to be spread on the usable agricultural area (F);
- retrieving a relationship, dependent on the inclination (α1-α4) of an agricultural spreader (100a-100c, 102), between a dispensing point of material to be spread onto at least one distribution disc (104a-104c, 106a-106c, 108, 110) of an agricultural spreader (100a-100c, 102) and a distribution of material to be spread, **characterized in that** the relationship has been ascertained by using the method for detecting the influence of the inclination (α1-α4) of an agricultural spreader (100a-100c, 102) on the distribution of material to be spread according to one of the preceding claims.

13. Evaluation device (10) for detecting the influence of the inclination (α1-α4) of an agricultural spreader (100a-100c, 102) on the distribution of material to be spread, **characterized by**:
- a receiving device (12), which is set up to receive discharge information on spreading processes of agricultural spreaders (100a-100c); and
- a calculating device (14), which is set up to ascertain on the basis of the received discharge information a relationship, dependent on the inclination (α1-α4) of an agricultural spreader (100a-100c, 102), between a dispensing point of material to be spread onto at least one distribution disc (104a-104c, 106a-106c, 108, 110) of an agricultural spreader (100a-100c, 102) and a distribution of material to be spread.

14. Evaluation device (10) according to Claim 13, **characterized in that** the calculating device (14) is set up to ascertain an inclination-dependent dispensing point profile, wherein the inclination-dependent dispensing point profile allows agricultural spreaders (100a-100c, 102) to set the dispensing point in dependence on a detected inclination (α1-α4).

15. Evaluation device (10) according to Claim 13 or 14, **characterized in that** the evaluation device (10) is set up to be used in a method for detecting the influence of the inclination (α1-α4) of an agricultural spreader (100a-100c, 102) on the distribution of material to be spread according to one of Claims 1 to 11.

## Revendications

1. Procédé pour détecter l'influence de l'inclinaison (α1 - a4) d'un épandeur agricole (100a - 100c, 102) sur la distribution du produit d'épandage, **caractérisé par** les étapes suivantes
- réception d'informations d'épandage concernant les opérations d'épandage des épandeurs agricoles (100a - 100c) par un dispositif d'interprétation (10) ; et
- détermination d'une relation dépendante de l'inclinaison (α1 - a4) d'un épandeur agricole (100a - 100c, 102) entre un point d'application de produit d'épandage sur au moins un disque de distribution (104a
- 104c, 106a - 106c, 108, 110) d'un épandeur agricole (100a - 100c, 102) et une distribution de produit d'épandage par le dispositif d'interprétation (10) sur la base des informations d'épandage reçues.

2. Procédé selon la revendication 1, **caractérisé en ce que** les informations d'épandage comprennent des indications à propos de l'inclinaison (α1 - a3) de l'épandeur agricole (100a - 100c) respectif, des indications à propos du point d'application réglé du produit d'épandage sur l'au moins un disque de distribution (104a - 104c, 106a - 106c) de l'épandeur agricole (100a - 100c) respectif et/ou des indications à propos de la distribution du produit d'épandage pendant l'opération d'épandage respective.

3. Procédé selon la revendication 2, **caractérisé en ce que** les indications à propos de la distribution du produit d'épandage pendant l'opération d'épandage respective comprennent des indications à propos de l'angle d'éjection et/ou de la portée de vol du produit d'épandage, des indications à propos des propriétés d'au moins un éventail d'épandage et/ou des indications à propos de la largeur de travail envisagée et/ou effective pendant l'opération d'épandage respective.

4. Procédé selon l'une des revendications précédentes, **caractérisé en ce que** les informations d'épandage comprennent des indications à propos du type de disque de distribution utilisé pendant l'opération d'épandage respective et/ou des indications à propos de la configuration de disques de distribution pendant l'opération d'épandage respective.

5. Procédé selon l'une des revendications précédentes, **caractérisé en ce que** les informations d'épandage comprennent des indications à propos du type de produit d'épandage, notamment une désignation d'espèce du produit d'épandage.

6. Procédé selon l'une des revendications précédentes, **caractérisé par** au moins l'une des étapes suivantes :
- détermination d'un profil de point d'application dépendant de l'inclinaison par le dispositif d'interprétation (10), le profil de point d'application dépendant de l'inclinaison permettant aux épandeurs agricoles (100a - 100c, 102) de régler le point d'application en fonction d'une inclinaison (α1 - α4) détectée ;
- mise à disposition du profil de point d'application dépendant de l'inclinaison pour invocation, notamment pour invocation en ligne, par les épandeurs agricoles (100a - 100c, 102).

7. Procédé selon l'une des revendications précédentes, **caractérisé par** au moins l'une des étapes suivantes :
- acquisition et/ou enregistrement d'informations d'épandage à propos d'une opération d'épandage par un ou plusieurs épandeurs agricoles (100a - 100c) ;
- envoi des informations d'épandage acquises et/ou enregistrées des épandeurs agricoles (100a - 100c) respectifs au dispositif d'interprétation (10).

8. Procédé selon la revendication 7, **caractérisé en ce que** l'acquisition d'informations d'épandage à propos d'une opération d'épandage par un ou plusieurs épandeurs agricoles (100a - 100c) comprend au moins l'une des étapes suivantes :
- acquisition, notamment acquisition en continu de l'inclinaison (α1 - α3) de l'épandeur agricole (100a-100c) respectif pendant l'opération d'épandage respective ;
- acquisition, notamment acquisition en continu du point d'application réglé du produit d'épandage sur au moins un disque de distribution (104a - 104c, 106a - 106c) de l'épandeur agricole (100a - 100c) respectif pendant l'opération d'épandage respective ;
- acquisition, notamment acquisition en continu de la distribution du produit d'épandage pendant l'opération d'épandage respective.

9. Procédé selon la revendication 8, **caractérisé en ce que** l'acquisition, notamment l'acquisition en continu de la distribution du produit d'épandage pendant l'opération d'épandage respective comprend au moins l'une des étapes suivantes :
- acquisition, notamment acquisition en continu de l'angle d'éjection et/ou de la portée de vol du produit d'épandage pendant l'opération d'épandage respective ;
- acquisition, notamment acquisition en continu des propriétés d'au moins un éventail d'épandage pendant l'opération d'épandage respective ;
- acquisition, notamment acquisition en continu de la largeur de travail envisagée et/ou effective pendant l'opération d'épandage respective.

10. Procédé selon l'une des revendications 7 à 9, **caractérisé en ce que** l'acquisition d'informations d'épandage à propos d'une opération d'épandage par un ou plusieurs épandeurs agricoles (100a - 100c) comprend au moins l'une des étapes suivantes :
- acquisition du type de disque de distribution utilisé pendant l'opération d'épandage respective ;
- acquisition de la configuration de disques de distribution pendant l'opération d'épandage respective.

11. Procédé selon l'une des revendications 7 à 10, **caractérisé en ce que** l'envoi des informations d'épandage acquises et/ou enregistrées des épandeurs agricoles (100a
- 100c) respectifs au dispositif d'interprétation (10) s'effectue au moins partiellement sans fil, notamment par voie radioélectrique.

12. Procédé pour épandre un produit d'épandage avec un épandeur agricole (100a - 100c, 102), comprenant les étapes suivantes :
- acquisition, notamment acquisition en continu de l'inclinaison (α1 - a4) de l'épandeur agricole (100a-100c, 102) pendant l'épandage du produit d'épandage sur une surface cultivée agricole (F) ;
- réglage automatique du point d'application du produit d'épandage sur au moins un disque de distribution (104a - 104c, 106a - 106c, 108, 110) en fonction de l'inclinaison (α1 - a4) acquise de l'épandeur agricole (100a - 100c, 102) pendant l'épandage du produit d'épandage sur la surface cultivée agricole (F) ;
- invocation d'une relation dépendante de l'inclinaison (α1 - α4) d'un épandeur agricole (100a-100c, 102) entre un point d'application du produit d'épandage sur au moins un disque de distribution (104a
- 104c, 106a - 106c, 108, 110) d'un épandeur agricole (100a - 100c, 102) et une distribution de produit d'épandage, **caractérisé en ce que** la relation est déterminée en utilisant un procédé pour détecter l'influence de l'inclinaison (α1 - a4) d'un épandeur agricole (100a - 100c, 102) sur la distribution du produit d'épandage selon l'une des revendications précédentes.

13. Dispositif d'interprétation (10) pour détecter l'influence de l'inclinaison (α1 - a4) d'un épandeur agricole (100a - 100c, 102) sur la distribution du produit d'épandage, **caractérisé par** :
- un dispositif de réception (12), qui est conçu pour recevoir des informations d'épandage concernant les opérations d'épandage d'épandeurs agricoles (100a-100c) ; et
- un dispositif de calcul (14), qui est conçu pour déterminer une relation dépendante de l'inclinaison (α1
- a4) d'un épandeur agricole (100a - 100c, 102) entre un point d'application de produit d'épandage sur au moins un disque de distribution (104a - 104c, 106a - 106c, 108, 110) d'un épandeur agricole (100a - 100c, 102) et une distribution de produit d'épandage sur la base des informations d'épandage reçues.

14. Dispositif d'interprétation (10) selon la revendication 13, **caractérisé en ce que** le dispositif de calcul (14) est conçu pour déterminer un profil d'application dépendant de l'inclinaison, le profil d'application dépendant de l'inclinaison permettant aux épandeurs agricoles (100a - 100c, 102) de régler le point d'application en fonction d'une inclinaison (α1 - a4) détectée.

15. Dispositif d'interprétation (10) selon la revendication 13 ou 14, **caractérisé en ce que** le dispositif d'interprétation (10) est conçu pour être utilisé dans un procédé pour détecter l'influence de l'inclinaison (α1 - a4) d'un épandeur agricole (100a - 100c, 102) sur la distribution du produit d'épandage selon l'une des revendications 1 à 11.
